# EUROPEAN PATENT APPLICATION

(11) **EP 3 587 036 A1**
(43) Date of publication of application: **01.01.2020**
(21) Application number: 18776347.9
(22) Date of filing: 27.02.2018
(51) Int. Cl.: B25B 23/142

(54) **TIGHTENING TOOL**

(30) Priority: 28.03.2017 JP 2017062194
(71) Applicant: Kyoto Tool Co., Ltd., Kyoto-shi Kyoto 612-8393 (JP)
(72) Inventor: YAMAGUCHI Yoshiyuki, kuse-gun Kyoto 613-0034 (JP); OKAWA Yuki, kuse-gun Kyoto 613-0034 (JP); MATSUMOTO Yoshiharu, Kyoto-shi Kyoto 606-8114 (JP)
(74) Representative: Schlief, Thomas P.
(86) International application number: PCT/JP2018/007236
(87) International publication number: WO 2018/180126

(57) **Abstract**

A tightening tool that brings awareness that a tightening torque generated when a member to be tightened by the action of an operator has reached a preset set torque, said tool comprises a torque setting unit capable of setting a set torque to a prescribed value by rotating a rotary member, and a rotational angle detecting unit that detects the rotational angle of the rotary member and outputs rotational angle information based on the detected rotational angle.

## Description

### Technical field

The present invention relates to a tightening tool.

### Background art

There has been known a torque wrench as a tightening tool to control a tightening torque by allowing a worker to perceive that a tightening torque generated by tightening a tightened member such as a bolt and a nut at a tightening point reaches a torque value previously set for the tightening tool (hereinafter "preset torque value"). In general, as examples of torque wrench, there is a so-called prelock torque wrench which needs a tool for setting a torque value operated by the worker to change the preset torque value, and a so-called preset torque wrench which allows the preset torque value to be changed by the operation of the worker without any tool.

The preset torque wrench needs to correctly set the preset torque value at each of the tightening points to control the tightening torque. In the case of a mechanical torque wrench, when the tightening member is tightened and the tightening torque reaches the present torque value, the head contacts a casing and so forth to produce a clicking noise and a vibration. This allows the worker to perceive that the tightening torque reaches the preset torque value.

In general, the mechanical torque wrench can change the preset torque value by rotating a dial rotating member to adjust the compressive force of a spring.

Incidentally, a torque wrench using an electronic torque sensor to calibrate a mechanical trip mechanism and a torque setting means has been disclosed (see, for example, Patent Literature 1). This mechanical torque wrench is equipped with an electronic torque sensor using a strain gauge, and therefore can be calibrated by the worker.

### Citation list

### Patent Literature

PTL1: Japanese Unexamined Patent Application Publication No. 2014-226776

### Summary of Invention

### Technical Problem

However, the mechanical torque wrench disclosed in Patent Literature 1 merely measures an actual tightening torque value by the torque sensor, but cannot detect the state of the rotating member of a torque value setting unit. Also, the mechanical torque wrench disclosed in Patent Literature 1 cannot quantify the preset torque value and send the quantified preset torque value to a server to control the preset torque value.

It is therefore an object of the present invention to detect a setting operation of a preset torque value in a tightening tool configured to set the present torque value by using a rotating member.

### Solution to Problem

An aspect of the present invention provides a tightening tool is configured to allow a worker to perceive that a tightening torque generated by tightening a tightened member by the worker reaches a preset torque value. The tightening tool includes a torque value setting unit configured to be able to set the preset torque value to a predetermined value by rotating a rotating member, and a rotation angle detector configured to detect a rotation angle of the rotating member, and output rotation angle information based on the detected rotation angle.

The tightening tool may include a set value calculation unit configured to calculate the preset torque value set by the torque value setting unit, based on the rotation angle information.

The rotation angle detector may include: a light emitter configured emit light to the rotating member; a light receiver configured to receive the light from the light emitter; and a light reception varying unit configured to rotate with the rotating member to vary a light receiving state of the light receiver. The rotation angle detector may detect the rotation angle, based on variation in the light receiving state of the light receiver.

The tightening tool may include a communication unit configured to transmit information about work to tighten the tightened member, including the rotation angle information, to an external device.

### Effect of the invention

According to the present invention, it is possible to detect a setting operation of a preset torque value in a tightening tool configured to set the present torque value by using a rotating member.

### Brief Description of Drawings

Fig. 1 is a perspective view illustrating a torque wrench as a tightening tool according to an embodiment of the present invention;
Fig. 2 is a front view illustrating the torque wrench illustrated in Fig. 1;
Fig. 3 is a bottom view illustrating the torque wrench illustrated in Fig. 1;
Fig. 4 is a partial cross-sectional view illustrating the internal structure of the torque wrench illustrated in Fig. 1;
Fig. 5 is a partial cross-sectional view illustrating the internal structure of the torque wrench illustrated in Fig. 1 when a load applied to the torque wrench is equal to or greater than a preset torque value;
Fig. 6 is a partial cross-sectional view illustrating a rotation angle detector of the torque wrench illustrated in Fig. 1;
Fig. 7 is a block diagram illustrating the rotation angle detector of the torque wrench illustrated in Fig. 1; and
Fig. 8 is a partial cross-sectional view illustrating another example of the rotation angle detector of the torque wrench illustrated in Fig. 1.

### Description of Embodiments

Hereinafter, an embodiment of the tightening tool according to the present invention will be described with reference to the drawings. With the present embodiment, a torque wrench including a torque value setting unit capable of setting a preset torque value by rotating a rotating member will be described, as an example of tightening tools configured to allow the worker to perceive that the tightening torque reaches the preset torque value.

### <Configuration of Torque Wrench>

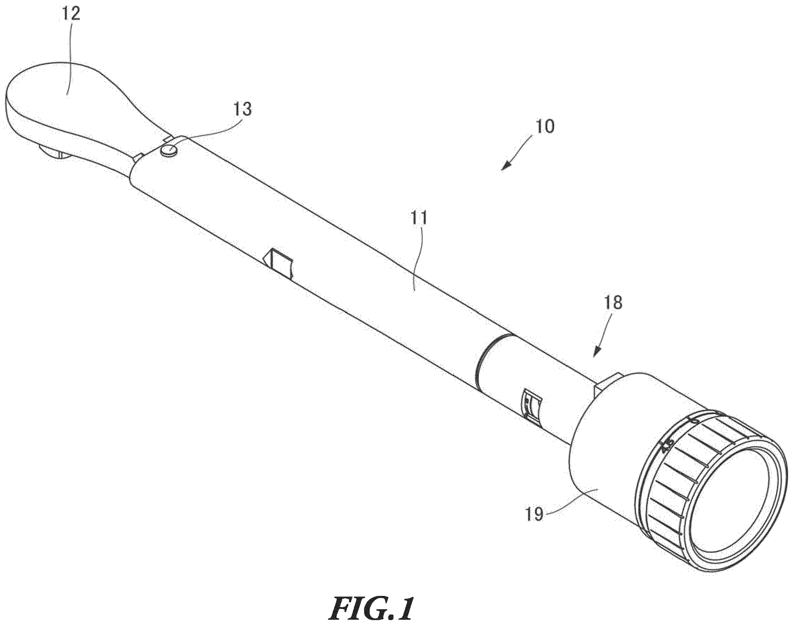

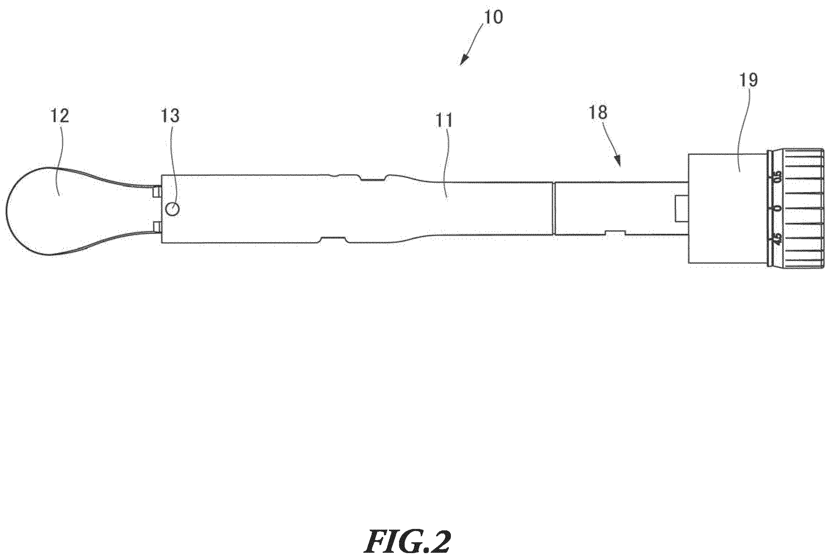

Fig. 1 is a perspective view illustrating a torque wrench 10 as a tightening tool according to an embodiment of the present invention. Fig. 2 is a front view of the torque wrench 10. As illustrated in Figs. 1 and 2, the torque wrench 10 is a so-called mechanical preset torque wrench. When a head 12 contacts a casing 11 due to a torque generated by a tightening operation, the torque wrench 10 produces a clicking noise and a vibration which allow the worker to perceive that the tightening torque reaches the preset torque value. The torque wrench 10 includes the casing 11, the head 12, a head pin 13, a torque value setting unit 18, and a rotation angle detector 19.

The casing 11 having an approximately cylindrical shape is configured to accommodate components of the torque wrench 10 such as the head 12, and forms the outer shape of the torque wrench 10. The head 12 is provided at one end of the casing 11. In addition, the torque value setting unit 18 and the rotation angle detector 19 are provided at the other end of the casing 11.

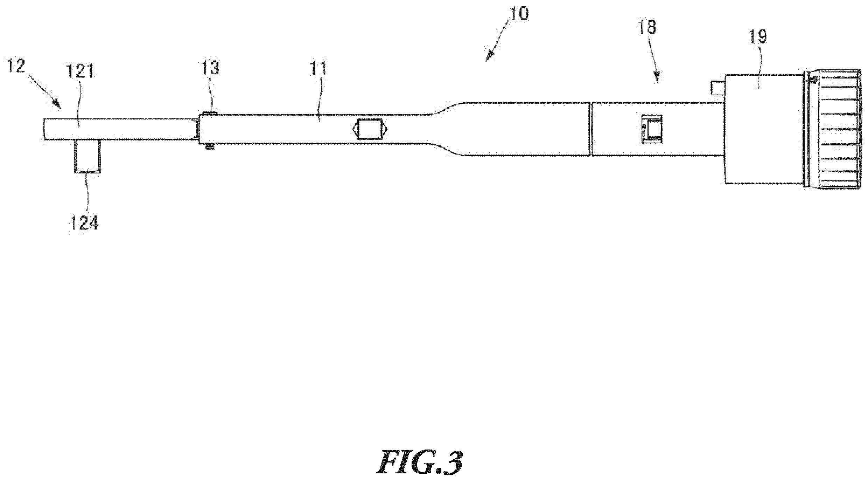

Fig. 3 is a bottom view illustrating the torque wrench 10. As illustrated in Fig. 3, the head 12 includes a ratchet head 121. The ratchet head 121 is exposed from the casing 11. When the tightened member is a bolt or nut, the ratchet head 121 is provided with a socket connector 124 to allow a socket wrench (not illustrated) engaging with the tightened member to be detachably attached to the ratchet head 121.

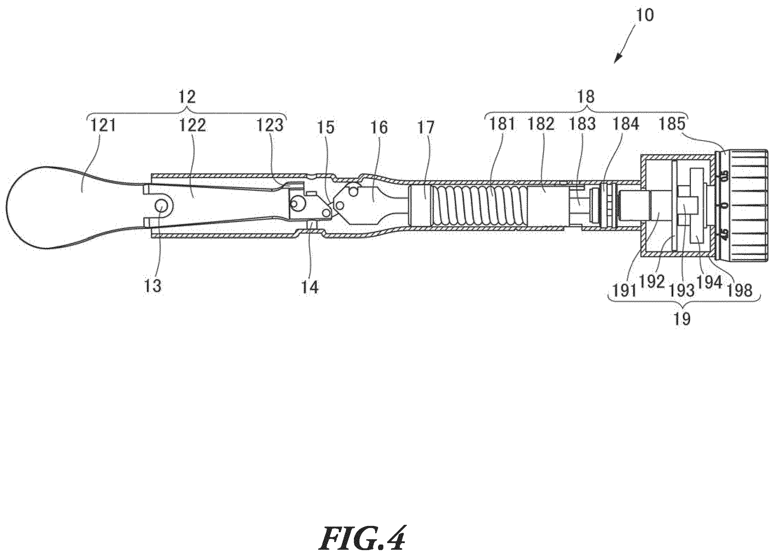

Fig. 4 is a partial cross-sectional view illustrating the internal structure of the torque wrench 10. In order to illustrate the internal structure of the torque wrench 10, Fig. 4 illustrates the cross-section of only the casing 11 and a housing 198 of the rotation angle detector 19. As illustrated in Fig. 4, the casing 11 accommodates an arm 122 and a contact portion 123 of the head 12, a gain adjustment screw 14, a linkage 15, a slider 16, a spring guide 17, and the torque value setting unit 18 which constitute the torque wrench 10.

The arm 122 and the contact portion 123 of the head 12 are provided in the casing 11. The head 12 is pivotally supported by the head pin 13 provided at the boundary between the ratchet head 121 and the arm 122 to turn with respect to the casing 11.

The arm 122 is accommodated in the casing 11. The head 12 is pivotally supported by the head pin 13 in the casing 11, and therefore the arm 122 can turn with respect to the head pin 13 in the casing 11.

The contact portion 123 is provided at one end of the arm 122 opposite to the other end of the arm 122 pivotally supported by the head pin 13. When the arm 122 turns in the casing 1, the contact portion 123 contacts the inner wall of the casing 11 to produce a clicking noise and a vibration. The contact portion 123 is provided in the direction in which the arm 122 turns when the load of the tightening operation is applied to the head 12. The gain adjustment screw 14 is provided at the one end of the arm 122 of the head 12 to penetrate the head 12 in the short direction of Fig. 4. The gain adjustment screw 14 is provided to adjust the gain of the motion of the arm 122 when a tightening torque is applied to the torque wrench 10. The arm 122 is provided with the linkage 15 which is connected to the slider 16 by a link mechanism.

One end of the slider 16 is connected to the arm 122 via the linkage 15, and the other end of the slider 16 is connected to a spring guide 17. The slider 16 moves in the casing 11 in the longitudinal direction when the casing 11 turns with respect to the head 12. In addition, the slider 16 includes a roller contacting the inner wall of the casing 11. The roller guides the movement of the slider 16 in the casing 11.

The spring guide 17 is an approximately cylindrical member. The cylindrical spring guide 17 is disposed in the casing 11 such that the casing 11 and the spring guide 17 have the same axis. The spring guide 17 guides the motion of a spring 181 of the torque value setting unit 18. The spring guide 17 includes a hole formed at the center of the bottom surface of the spring guide 17. The other end of the slider 16 is inserted into the hole of the spring guide 17. The other surface of the spring guide 17 contacts one end of the spring 181.

The torque value setting unit 18 includes the spring 181, a torque value display 182, a setting bolt 183, and a lock nut 184 which are provided in the casing 11. In addition, the torque value setting unit 18 includes a torque value setting grip 185 disposed outside the casing 11. The torque value setting unit 18 is configured to be able to set the preset torque value by rotating the torque value setting grip 185 to change the compressive force of the spring 181.

The spring 181 is a compression spring which is compressed in the longitudinal direction of the torque wrench 10. The spring 181 may be, for example, a coil spring. As described above, the one end of the spring 181 contacts the other flat surface of the spring guide 17.

The torque value display 182 having an approximately cylindrical shape is disposed in the casing 11. One end of the torque value display 182 contacts the other end of the spring 181, and the other end of the torque value display 182 is disposed to face the torque value setting grip 185. The torque value display 182 displays a scale indicating the preset torque value on its surface. A baffle (not illustrated) is attached to the inner wall of the casing 11. The torque value display 182 is provided to be able to slide with respect to the baffle in the axial direction of the torque wrench 10. The baffle prevents the torque value display 182 from turning in the casing 11, and allows the torque value display 182 to move in the casing 11 in the axial direction. By this means, it is possible to always read the scale of the torque value display 182 from a display window formed in the casing 11. Moreover, an internal thread is provided to penetrate the center of the torque value display 182 in the longitudinal direction.

The setting bolt 183 screws the internal thread of the torque value display 182. A flange of the setting bolt 183 engages with the lock nut 184.

The lock nut 184 having an approximately disk shape is fixed in the casing 11. A hole is formed in the center of the lock nut 184. The shaft of the setting bolt 183 is inserted into the hole of the lock nut 184.

The torque value setting grip 185 having an approximately cylindrical shape is provided at one end of the torque wrench 10. The torque value setting grip 185 functions as a rotating member. The torque value setting grip 185 is connected to the setting bolt 185 via the rotation angle detector 19 to rotate the setting bolt 183.

### <Motion of Torque Wrench>

Now, the motion of the torque wrench 10 will be described. Here, a case in which the worker tightens the tightened member with a predetermined tightening torque value will be described as an example.

When the torque value setting grip 185 is rotated, the setting bolt 183 is rotated with the torque value setting grip 185. When the setting bolt 183 is rotated, the torque value display 182 moves in the casing 11 to compress the spring 181, so that the compressive force of the spring 181 is changed. The worker checks that a preset torque value displayed on the set torque value display 182 is a predetermined value, and stops the rotation of the torque value setting grip 185. After that, the worker performs the tightening operation.

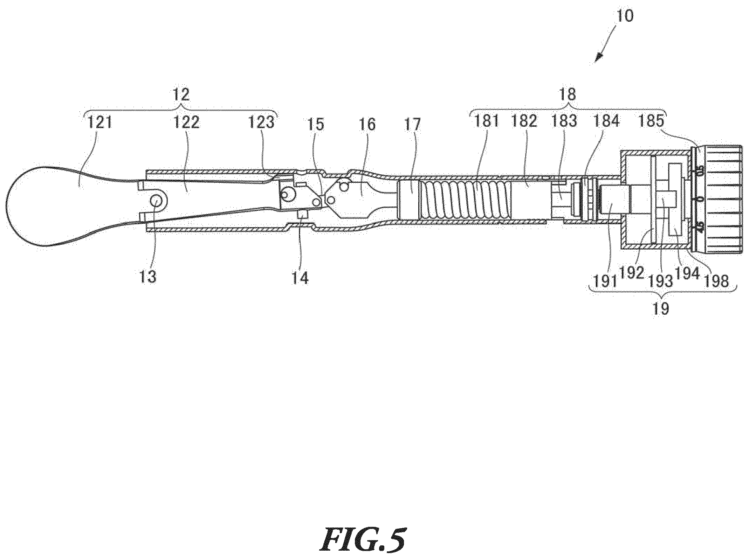

Fig. 5 is a partial cross-sectional view illustrating the internal structure of the torque wrench 10 when a load applied to the torque wrench 10 is equal to or greater than the preset torque value. As illustrated in Fig. 5, when the tightened member is tightened by the torque wrench 10, the compressive force is applied from the spring 181 to the head 12 via the slider 16 and the linkage 15. When the tightening torque reaches the preset torque value set by the torque value setting unit 18, a force generated by the tightening torque exceeds the compressive force of the spring 181, so that so that the state of the casing 11 and the slider 16 illustrated in Fig. 4 is changed to the state illustrated in Fig. 5.

The casing 11 turns with respect to the head pin 13, and the inner wall of the casing 11 contacts the contact portion 123. When the contact portion 123 contacts the inner wall of the casing 11, a clicking noise and a vibration are produced from the torque wrench 10.

### <Configuration and Operation of Rotation Angle Detector>

Next, the configuration and the operation of the rotation angle detector 19 will be described.

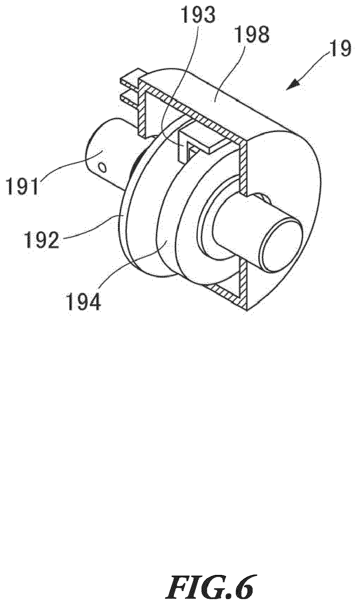

Fig. 6 is a partial cross-sectional view illustrating the rotation angle detector 19 of the torque wrench 10. In Fig. 6, a housing 198 of the rotation angle detector 19 is illustrated in a cross-sectional view. As illustrated in Fig. 6, the rotation angle detector 19 includes the housing 198, and a rotating shaft 191, a substrate 192, an encoder unit 193, a disk 194, a set value calculation unit 195, and a communication unit 196 accommodated in the housing 198.

The rotating shaft 191 is connected to the setting bolt 183 and the torque value setting grip 185 illustrated in Fig. 4 to be able to cooperate with them. The rotating shaft 191 transfers the torque from the torque value setting grip 185 rotated by the worker to the setting bolt 183.

The substrate 192 is a member on which electronic components such as the encoder unit 193, the set value calculation unit 195, and the communication unit 196 can be placed. A well-known electronic circuit substrate such as a printed circuit board may be used as the substrate 192. The rotating shaft 191 is inserted into a hole formed in the substrate 192.

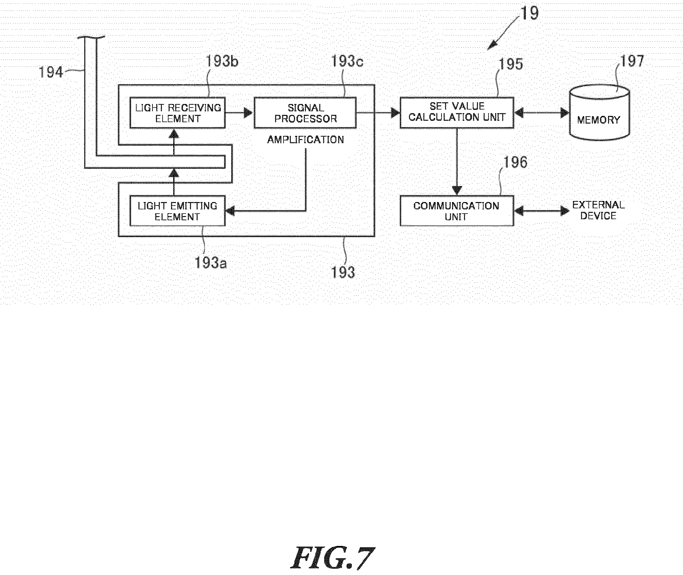

Fig. 7 is a block diagram illustrating the rotation angle detector 19 of the torque wrench 10. As illustrated in Fig. 7, the encoder unit 193 includes a light emitting element 193a, a light receiving element 193b, and a signal processor 193c. As the encoder unit 193, an absolute encoder or an incremental encoder, which is well-known as a rotary encoder, may be used.

As the light emitting element 193a, various types of light sources such as a light emitting diode and a laser diode may be used. The light emitting element 193a functions as a light emitter configured to emit light to the disk 194.

As the light receiving element 193b, for example, a photo diode may be used. The light receiving element 193b functions as a light receiver configured to receive part of the light emitted from the light emitting element 193a, which has not been varied, for example, has not been reflected, blocked or refracted by the disk 194. The light receiving element 193b outputs a light reception signal based on the received light.

The signal processor 193c performs signal processing, for example, amplifies the light reception signal outputted from the light receiving element 193b, detects the rotation angle of the setting bolt 183, and outputs information on the rotation angle (hereinafter "rotation angle information") which is electronic information based on the detected rotation angle of the setting bolt 183 to the set value calculation unit 195. In addition, in order to save the electric power and stabilize the operation of the light emitting element 193a, the signal processor 193c controls the electric power to drive the light emitting element 193a and the operation of the light emitting element 193a, based on, for example, the amount of light received.

The rotating shaft 191 penetrates the center of the disk 194, and rotates with the disk 194. The disk 194 functions as a light reception varying unit configured to vary the light receiving state of the light receiving element 193b.

The disk 194 varies the light receiving state of the light receiving element 193b by preventing the light from the light emitting element 193a from passing therethrough. The disk 194 having an approximately cup-like shape includes a circular flat plate, a side portion provided around the outer periphery of the flat plate, and light permeable portions formed on the side portion. The flat plate and the side portion of the disk 194 have light impermeability (light blocking effect). The light permeable portions are formed as slits on the side portion at regular intervals to allow the light from the light emitting element 193a to pass therethrough.

Here, the disk 194 is not limited to the above-described light permeable type having the light permeable portions. For example, a prism is applicable to refract the light from the light emitting element 193a, so that it is possible to vary the light receiving state of the light receiving element 193b.

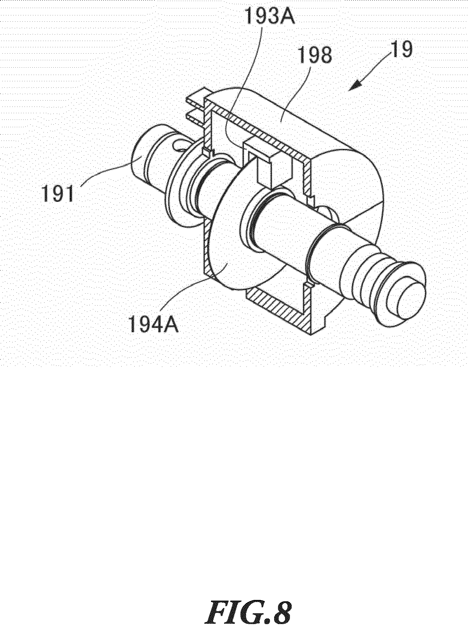

Fig. 8 is a partial cross-sectional view illustrating another example of the rotation angle detector 19 of the torque wrench 10. The shape of a disk 194A is not limited to the approximately cup-like shape including the flat plate and the side portion as described above. For example, the disk 194A may be a circular plate having light permeable portions in the flat plate. In this case, an encoder unit 193 is provided to sandwich the flat plate of the disk 194A.

The set value calculation unit 195 calculates the rotation angle (the number of rotations and the amount of rotation) of the setting bolt 183, based on the signal outputted from the signal processor 193c of the encoder unit 193. In addition, the set value calculation unit 195 calculates the preset torque value set by the torque value setting grip 185, based on the rotation angle of the setting bolt 183. The set value calculation unit 195 pays attention to the change in the compressive force of the spring 181 depending on the rotation angle of the setting bolt 183, and calculates the preset torque value of the torque value setting unit 18, based on the detected rotation angle of the setting bolt 183.

The set value calculation unit 195 calculates the preset torque value by using information indicating the correlation between the rotation angle and the preset torque value stored in a memory 197 (for example, a conversion formula or a data table for calculating the preset torque value based on the rotation angle), and outputs the calculated preset torque value. The set value calculation unit 195 may output the calculated preset torque value associated with the information on the time and date of the work, the worker and so forth.

The communication unit 196 transmits information about the work to tighten the tightened member, including either the data on the preset torque value outputted from the set value calculation unit 195 or the information on the turn angle, to an external device such as an information processor (not illustrated). The communication path of the communication unit 196 may be wireless or wired. Moreover, the type of the communication format of the communication unit 196 with the external device is not limited. For example, Bluetooth (trademark), infrared communication, WAN (wide area network), and LAN (local area network) are applicable.

With the present embodiment of the torque wrench 10 as described above, the rotation angle detector 19 detects the rotation angle of the setting bolt 183 rotated to adjust the compressive force of the spring 181. That is, the torque wrench 10, which is a mechanical torque wrench, can detect the operating state of the torque value setting unit 18.

In addition, with the present embodiment of the torque wrench 10, the set value calculation unit 195 calculates the presser torque value set by the torque value setting unit 18, based on the information on the rotation angle detected by the rotation angle detector 19. That is, the mechanical torque wrench 10 can acquire data on the preset torque value. Moreover, the mechanical torque wrench 10 can improve the traceability of the preset torque value by using the acquired data on the preset torque value.

Furthermore, with the present embodiment of the torque wrench 10, the communication unit 196 can transmit the data on the rotation angle of the setting bolt 183 detected by the rotation angle detector 19 and the preset torque value calculated by the set value calculation unit 195 to an external device.

Here, the present invention is applicable to a tightening tool different from the torque wrench 10, which does not include the set value calculation unit 195 and the light reception signal from the encoder unit 193 is directly outputted from the communication unit 196 to an external device. Moreover, the present invention is applicable to a tightening tool different from the torque wrench 10, which does not include the communication unit 196, and, for example, the memory 197 may store the data on the preset torque value.

Moreover, the tightening tool according to the present invention may include a rotation angle detector with, for example, a magnetic, laser, or capacitance type encoder, instead of the rotation angle detector 19 with the optical encoder unit 193.

Furthermore, for the tightening tool according to the present invention, the set value calculation unit 195 may have a function to perform zero point calibration to calibrate the set value of the torque value setting unit 18 to any default value or the limit point (original point) of the set range of the torque value setting unit 18 automatically or by the operation of the worker before the preset torque value is set.

### Reference Signs List

- 10: torque wrench
- 11: casing
- 12: head
- 13: head pin
- 14: gain adjustment screw
- 15: linkage
- 16: slider
- 17: spring guide
- 18: torque value setting unit
- 19: rotation angle detector
- 121: ratchet head
- 122: arm
- 123: contact portion
- 124: socket connector
- 181: spring
- 182: torque value display
- 183: setting bolt
- 184: lock nut
- 185: torque value setting grip
- 191: rotating shaft
- 192: substrate
- 193: encoder unit
- 193A: encoder unit
- 193a: light emitting element
- 193b: light receiving element
- 193c: signal processor
- 194: disk
- 194A: disk
- 195: set value calculation unit
- 196: communication unit
- 197: memory
- 198: housing

## Claims

1. A tightening tool (10) configured to allow a worker to perceive that a tightening torque generated by tightening a tightened member by the worker reaches a preset torque value, the tightening tool (10) comprising:
a torque value setting unit (18) configured to be able to set the preset torque value to a predetermined value by rotating a rotating member (185); and
a rotation angle detector (19) configured to detect a rotation angle of the rotating member (185), and output rotation angle information based on the detected rotation angle.

2. The tightening tool (1) according to claim 1, further comprising a set value calculation unit (195) configured to calculate the preset torque value set by the torque value setting unit (18), based on the rotation angle information.

3. The tightening tool (1) according to claim 1, wherein the rotation angle detector (19) includes:
a light emitter (193a) configured emit light to the rotating member (185);
a light receiver (193b) configured to receive the light from the light emitter (193a); and
a light reception varying unit (194, 194A) configured to rotate with the rotating member (185) to vary a light receiving state of the light receiver (193b), and
the rotation angle detector (19) detects the rotation angle, based on variation in the light receiving state of the light receiver (193b).

4. The tightening tool (1) according to claim 1, further comprising a communication unit (196) configured to transmit information about work to tighten the tightened member, including the rotation angle information, to an external device.
